# EUROPÄISCHE PATENTSCHRIFT

(11) **EP 3 626 538 B1**
(45) Veröffentlichungstag und Bekanntmachung des Hinweises auf die Patenterteilung: **30.09.2020**
(21) Anmeldenummer: 19197235.5
(22) Anmeldetag: 13.09.2019
(51) Int. Cl.: B60R 7/04

(54) **KONSOLENEINRICHTUNG FÜR NUTZFAHRZEUGKABINE**
CONSOLE DEVICE FOR A COMMERCIAL VEHICLE CABIN
DISPOSITIF DE CONSOLE POUR CABINE DE VÉHICULE UTILITAIRE

(30) Priorität: 19.09.2018 DE 102018122962; 21.08.2019 DE 102019122544
(43) Veröffentlichungstag der Anmeldung: 25.03.2020
(73) Patentinhaber: Grammer AG, 92224 Amberg (DE)
(72) Erfinder: Ott, Richard, 92245 Kümmersbruck (DE); Fischer, Johann, 92286 Rieden (DE); Hegen, Martin, 92421 Schwandorf (DE)
(74) Vertreter: Hannke, Christian

(56) Entgegenhaltungen:
- EP-A1- 1 391 349
- US-A- 6 135 529
- US-A1- 2003 197 392
- US-A1- 2006 085 940
- US-A1- 2008 290 680
- US-A1- 2010 078 954

## Beschreibung

Die Erfindung betrifft eine Konsoleneinrichtung für eine Cockpiteinrichtung insbesondere für Nutzfahrzeuge.

Eine derartige Cockpiteinrichtung wird in der Regel in einer Nutzfahrzeugkabine, insbesondere für LKWs Anwendung finden. Nutzfahrzeugkabinen, insbesondere für LKWs, sind häufig begrenzt in ihrem Innenraum, der einem Fahrer zur Verfügung steht. Häufig besteht jedoch der Wunsch, dass man zum einen eine Mittelkonsole benötigt, auf der man etwas ablegen kann und in der man gegebenenfalls in darin angebrachten Staufächern etwas unterbringen kann. Zum anderen sollte diese Mittelkonsole jedoch derart ausgebildet sein, dass sie möglichst wenig Platz innerhalb der Nutzfahrzeugkabine wegnimmt, sodass gegebenenfalls in diesem vorderen Bereich der Nutzfahrzeugkabine, der von der Mittelkonsole beanspruchte Platz, auch anderweitig verwendet werden kann.

Dies ist insbesondere dann der Fall, wenn die Nutzfahrzeugkabine für andere Tätigkeiten im Stillstand des Fahrzeuges, also nach erfolgter Fahrt, benötigt wird. Beispielsweise kann hier als eine der Tätigkeiten das Nutzen der Nutzfahrzeugkabine als Kochbereich angedacht werden. In diesem Fall würde die angeordnete Nutzfahrzeugkabine störend im Weg stehen.

Aus dem Stand der Technik sind die Dokumente US 2008 / 290680 A1 und US 2003 / 197392 A1 bekannt. Diese Dokumente zeigen Konsoleneinrichtungen für Fahrzeuge, nach dem oberbegriff des Anspruchs 1, welche über ein Schienensystem am Fahrzeugboden verlagerbar angeordnet sind. Die Konsoleneinrichtungen umfassen jeweils eine Arretierungseinrichtung, mittels welcher ein Grundkörper an einer bestimmten Position festlegbar ist.

Das Dokument EP 1 391 349 A1) zeigt eine Konsoleneinrichtung für ein Fahrzeug mit einer Anzeigeeinrichtung und zugehörigen Bedienelementen.

Das Dokument US 6 135 529 A offenbart eine Konsoleneinrichtung für ein Fahrzeug, welche einen fest am Fahrzeug angeordneten einen ersten Abschnitt umfasst. Ein zweiter Abschnitt ist in dem ersten Abschnitt angeordnet und aus diesem heraus verlagerbar.

Das Dokument US 6135 529 zeigt eine Konsoleneinrichtung für ein Fahrzeug, welche ein Rollgestell umfasst auf welchem ein Grundkörper verlagerbar angeordnet ist.

Aufgabe der Erfindung ist es demnach eine Konsoleneinrichtung bereitzustellen, welche die oben angeführten Problem löst. Ferner ist es Aufgabe der Erfindung eine Cockpiteinrichtung bereitzustellen, welche die Eingangs angeführten Probleme löst. Schließlich ist es Aufgabe der Erfindung eine Fahrzeugkabine für Nutzfahrzeuge, welche die Eingangs angeführten Probleme löst.

Die Aufgaben werden gelöst durch die Ansprüche 1, 11 und 12. Vorteilhafte Ausgestaltungen werden in den Unteransprüchen offenbart.

Erfindungsgemäß wird somit eine Konsoleneinrichtung für eine Cockpiteinrichtung, insbesondere für Nutzfahrzeuge bereitgestellt, wobei die Konsoleneinrichtung entlang einer Breitenachse Y' im Wesentlichen mittig zu der Cockpiteinrichtung angeordnet und entlang einer Längsachse X' relativ zur Cockpiteinrichtung verlagerbar ist, wobei ein Grundkörper der Konsoleneinrichtung an einer Fahrzeugkarosserie mittels einer Schienenvorrichtung anordenbar ist, wobei die Schienenvorrichtung zumindest eine Arretierungseinrichtung umfasst, welche eine Verlagerung der Konsoleneinrichtung in einem Ruhezustand arretiert.

Eine Cockpiteinrichtung ist vorzugsweise in einem Frontbereich einer Fahrzeugkabine unterhalb der Windschutzscheibe angeordnet. Vorteilhafterweise erstreckt sich die Cockpiteinrichtung zumindest abschnittsweise entlang der Breitenachse Y' der Fahrzeugkabine. Es wäre auch denkbar, dass sich die Cockpiteinrichtung entlang der gesamten Breitenachse Y' der Fahrzeugkabine erstreckt. Vorteilhafterweise umfasst die Cockpiteinrichtung auf der Fahrerseite einen Armaturenbereich und gegebenenfalls ein Lenkrad. Auf der Beifahrerseite kann die Cockpiteinrichtung vorteilhafterweise Ablagen aufweisen. Aus dem Stand der Technik bekannte Cockpiteinrichtungen weisen in der Regel einen Mittelteil auf, welcher die Fußräume zwischen der Fahrer- und der Beifahrerseite abtrennt.

Die Fahrzeugkabine und die Cockpiteinrichtungen weisen Erstreckungen entlang einer Höhenachse Z' einer Längsachse X' und einer Breitenachse Y' auf. Die Konsoleneinrichtung weist eine Erstreckung entlang einer Höhenachse Z einer Längsachse X und einer Breitenachse Y auf.

Die erfindungsgemäße Konsoleneinrichtung ist ausziehbar, entlang der Längsachse X', also in den Innenraum der Fahrzeugkabine, in der Cockpiteinrichtung angeordnet. Vorteilhafterweise ist diese Konsoleneinrichtung im Wesentlichen mittig entlang der Breitenachse Y' der Fahrzeugkabine angeordnet und beabstandet somit die jeweiligen Fußräume auf der Fahrer- und der Beifahrerseite. Eine derartige Mittelkonsole lässt sich aus dem vorderen Armaturenbereich von vorne nach hinten ausziehen und erzeugt somit eine in der Mitte angeordnete Mittelkonsole zur Ablage von verschiedenen Dingen, wie beispielsweise einem Mobiltelefon oder Tablets oder Laptops.

Bei Nichtgebrauch kann die Konsoleneinrichtung zumindest abschnittsweise wieder in die Cockpiteinrichtung verlagert und in dieser aufgenommen werden. Je nach Design kann in dieser eingefahrenen Position die Konsoleneinrichtung entlang der Längsachse X' vollständig innerhalb der Cockpiteinrichtung angeordnet sein oder einen gewissen Überstand in die Fahrzeugkabine hinein aufweisen. In beiden Fällen ist durch diesen eingefahrenen Zustand ein zusätzlicher Raumgewinn innerhalb der Fahrzeugkabine erreicht.

Nach einer bevorzugten Ausführungsform erstreckt sich die Cockpiteinrichtung entlang der Höhenachse Z über die Konsoleneinrichtung beziehungsweise über eine oberste Fläche der Konsoleneinrichtung. Es wäre jedoch auch denkbar, dass die oberste Fläche der Konsoleneinrichtung flächig mit der Cockpiteinrichtung abschließt. Die durch ein Herausziehen entstehende Lücke könnte dabei mit einem faltbaren Element verschlossen werden.

Die erfindungsgemäße Schieneneinrichtung ist an der Fahrzeugkarosserie oder dem Fahrzeugkabinenboden angeordnet.

Nach einer bevorzugten Ausführungsform weist der Grundkörpers eine entlang der Höhenachse Z obere Fläche auf. Vorteilhafterweise ist die obere Fläche als ein Ablageelement ausgebildet. Ein solches Ablageelement weist bevorzugt eine Ablagefläche auf, welche die zur Ablage weiterer Gegenstände, wie Schreibmaterial oder dergleichen dient. Dabei kann es von Vorteil sein, dass das Ablageelement zumindest einen Vertiefungsbereich aufweist. Dies hat zum Vorteil, dass die Konsoleneinrichtung auch dann eingefahren werden kann, wenn flache Gegenstände, wie Laptops und dergleichen zugeklappt darauf liegen bleiben und zusammen mit der Konsoleneinrichtung in den Armaturenbereich nach vorne eingefahren werden.

Nach einer weiteren bevorzugten Ausführungsform ist das Ablageelement entlang der Längsachse X relativ zu dem Grundkörper verlagerbar. Hierzu kann vorteilhafterweise ein Schienensystem am Grundkörper vorgesehen sein, mit welchem das Ablageelement an dem Grundkörper verlagerbar angeordnet ist.

Nach einer weiteren vorteilhaften Ausführungsform ist in dem Grundkörper zumindest ein Schubladenelement verlagerbar angeordnet. Vorteilhafterweise ist das zumindest eine Schubladenelement mittels eines Schienensystem an dem Grundkörper angeordnet.

Nach einer weiteren bevorzugten Ausführungsform ist in der oberen Fläche des Grundkörpers ein Bedienbildschirm, ein Tabletcomputer oder eine Aufnahme für einen Tabletcomputer integriert. Ein solcher Bedienbildschirm oder auch Touch screen kann eine Ausgabe- beziehungsweise Eingabeeinrichtung für einen internen Computer sein. Ein solcher interner Computer kann mit einem Bordcomputer verknüpft sein oder von diesem unabhängig sein. Analog könnte auch ein unabhängiger Tabletcomputer mit einem Bordcomputer verknüpft sein. Denkbar wäre natürlich auch, wenn der Bedienbildschirm direkt mit dem Bordcomputer verknüpft ist. Der Bedienbildschirm, beziehungsweise der Tabletcomputer kann zur Ausgabe von Fahrzeugdaten, Navigationsdaten und sonstigen Daten dienen. Ferner kann der Bedienbildschirm für Unterhaltungszwecke dienen. Dabei ist es vorstellbar, wenn der Bedienbildschirm, beziehungsweise der Tabletcomputer neigbar, beziehungsweise entlang der Höhenachse Z aufklappbar, relativ zu dem Grundkörper ausgestaltet ist.

Nach einer weiteren bevorzugten Ausführungsform ist in der oberen Fläche eine Aufnahme für einen Tabletcomputer integriert. Eine solche Aufnahme kann als eine Vertiefung in der oberen Fläche ausgestaltet sein, in welcher handelsübliche Tablets aufgenommen werden können. Vorzugsweise ist demnach eine Tabletoberfläche flächig mit der oberen Fläche des Grundkörpers. Ferner können in der Aufnahme entsprechend benötigte Anschlüsse vorhanden sein. Diese Anschlüsse könnten beispielsweise eine Stromversorgung, ein Anschluss zum Datenaustausch, wie beispielsweise ein USB-Anschluss oder Ähnliches, sein. Denkbar wäre natürlich auch, dass eine Datenverbindung zwischen dem Tabletcomputer zu dem Bordcomputer drahtlos, beispielsweise via Bluetooth erfolgen kann.

Erfindungsgemäß umfasst die Schienenvorrichtung zumindest eine Schieneneinrichtung, welche eine im Wesentlichen U-förmig ausgebildete Gleitschiene und eine im Wesentlichen U-förmig ausgebildete stationäre Schiene aufweist. Dabei umgreift die Gleitschiene die stationäre Schiene zumindest abschnittsweise. Bevorzugt ist die stationäre Schiene an dem Fahrzeugkabinenboden beziehungsweise an der Fahrzeugkarosserie befestigt. Die Gleitschiene ist vorteilhafterweise an dem Grundkörper befestigt. Demnach ist bevorzugt die stationäre Schiene entlang der Höhenachsen Z, Z' unter der Gleitschien angeordnet. Erfindungsgemäß ist zumindest ein Lagerungselement zwischen der Gleitschiene und der stationären Schiene angeordnet.

Erfindungsgemäß ist an der stationären Schiene zumindest eine Zahnleiste vorgesehen. Diese Zahnleiste kann vorteilhafterweise bereits in der Schiene integriert sein. Dies kann beispielsweise durch einen Stanz- oder Fräsvorgang erfolgen. Alternativ kann die Zahnleiste auch ein individuelles Element sein, welches an der stationären Schiene befestigt wird. Dies kann durch eine Schraubverbindung, eine Nietverbindung, eine Schweißverbindung oder eine weitere sonstige geeignete Verbindungsart erfolgen. Die Zahnleiste weist eine Vielzahl von Zähnen und zwischen den Zähnen angeordnete nach außen offene Rastöffnungen auf. Mit anderen Worten ist die Zahnleiste kammartig ausgebildet. Die Zähne erstrecken sich vorteilhafterweise entlang der Höhenachse Z nach unten als zum Boden der Fahrzeugkabine beziehungsweise der Fahrzeugkarosserie hin.

Nach einer weiteren vorteilhaften Ausführungsform umfasst die Arretierungseinrichtung eine Betätigungseinrichtung, welche zumindest abschnittsweise um eine erste Rotationsachse rotierbar ist. Vorzugsweise ist mittels einer Übertragungseinrichtung diese erste Rotationbewegung in eine zweite Rotationsbewegung eines Riegelelements um eine zweite Rotationsachse übertragbar. Bevorzugt ist durch diese zweite Rotationsbewegung des Riegelelements um eine zweite Rotationsachse die Arretierung der Schienenvorrichtung lösbar. Bevorzugt greift in einem Ruhezustand ein Rastabschnitt des Riegelelements in die Rastöffnungen der Zahnleiste ein. In dem Ruhezustand beziehungsweise dem arretierten Zustand ist somit durch den Eingriff des Riegelelements in die Zahnleiste eine Verlagerung der Gleitschiene relativ zu der stationären Schiene unterbunden. Die Konsoleneinrichtung ist somit an dieser entsprechenden Position arretiert.

Nach einer besonders bevorzugten Ausführungsform ist die Betätigungseinrichtung in einem entlang der Höhenachse Z unteren Bereich der Konsoleneinrichtung angeordnet. Die Betätigungseinrichtung kann somit leicht mit dem Fuß betätigt werden. Vorteilhafterweise verursacht eine Rotation der Betätigungseinrichtung entlang der Höhenachse Z nach unten eine Rotation des Rastabschnitts des Riegelelements entlang der Höhenachse Z nach unten, wodurch der Eingriff in die Rastöffnungen der Zahnleiste gelöst wird und die Arretierung der Konsoleneinrichtung gelöst wird. Demnach kann durch eine Trittbewegung entlang der Höhenachse Z nach unten die Arretierung gelöst werden und die Konsoleneinrichtung entsprechend verlagert werden.

Vorteilhafterweise kann die Konsoleneinrichtung nur dann verlagert werden, solange die Betätigungseinrichtung betätigt wird. Wird die Betätigung unterbrochen, so arretiert die Arretierungseinrichtung die Konsoleneinrichtung automatisch an der entsprechenden Position. Eine Lösung der Arretierung durch eine vorteilhafte Trittbewegung mit einem Fuß und der vorteilhaften automatischen Arretierung nach dem der Fuß wieder von dem Betätigungselement genommen wird, ermöglichen eine äußerst einfache Bedienung der Konsoleneinrichtung.

Nach einer bevorzugten Ausführungsform weist die Betätigungseinrichtung einen Bügelabschnitt, welcher entlang der Längsachse X vor der ersten Rotationsachse liegt, und einen Hebelabschnitt, welcher entlang der Längsachse X hinter der ersten Rotationsachse liegt, auf. Vorzugsweise ist der Hebelabschnitt mit einem hinteren Abschnitt eines ersten Elementes der Übertragungseinrichtung kraft- und/oder formschlüssig verbunden. Bevorzugt ist das erste Element um die erste Rotationsachse rotierbar. Vorteilhafterweise ist ein vorderer Abschnitt des ersten Elements mit einem hinteren Abschnitt eines mittleren Elements kraft- und/oder formschlüssig verbunden. Bevorzugt ist das mittlere Element um eine zweite Rotationsachse rotierbar. Vorteilhafterweise ist ein vorderer Abschnitt des mittleren Elements mit einem vorderen Abschnitt des Riegelelements kraft- und/oder formschlüssig verbunden.

Ein vorteilhaftes Herunterdrücken des Bügelabschnitts der Betätigungseinrichtung verursacht somit eine Rotation des Hebelabschnitts entlang der Höhenachse Z nach oben. Durch die vorteilhafte kraft- und/oder formschlüssige Verbindung mit dem hinteren Abschnitt eines ersten Elements der Übertragungseinrichtung wird dieser hintere Abschnitt entsprechend entlang der Höhenachse Z nach oben verlagert. Gleichzeitig rotiert der vordere Abschnitt des ersten Elements, welcher dem hinteren Abschnitt gegenüberliegt entlang der Höhenachse Z nach unten. Durch die vorteilhafte kraft- und/oder formschlüssige Verbindung mit dem hinteren Abschnitt des mittleren Elementes der Übertragungseinrichtung wird dieser hintere Abschnitt entsprechend entlang der Höhenachse Z nach unten rotiert. Gleichzeitig rotiert der vordere Abschnitt des mittleren Elements um die zweite Rotationsachse entlang der Höhenachse Z nach oben. Durch die vorteilhafte kraft- und/oder formschlüssige Verbindung mit dem vorderen Abschnitt des Riegelelements wird dieser vordere Abschnitt entsprechend entlang der Höhenachse Z nach oben rotiert. Demzufolge rotiert der gegenüberliegende Rastabschnitt des Riegelelements um die zweite Rotationsachse entlang der Höhenachse Z nach unten. Durch diese Rotation wird der Eingriff des Rastabschnitts in der Zahnleiste gelöst und die Konsoleneinrichtung kann verlagert werden.

Nach einer weiteren bevorzugten Ausführungsform umfasst die Arretierungseinrichtung ein Befestigungselement, welches an der Gleitschiene befestigt ist. Vorteilhafterweise ist an dem Befestigungselement eine erste Lagerungseinrichtung angeordnet, an welcher die Betätigungseinrichtung und das erste Element der Übertragungseinrichtung rotierbar, um die erste Rotationsachse, angeordnet sind. Vorzugsweise sind das Riegelelement und das mittlere Element der Übertragungseinrichtung mittels einer zweiten Lagerungseinrichtung an der Gleitschiene angeordnet. Bevorzugt sind die erste und die zweite Lagerungseinrichtung als Lagerungswellen ausgebildet. Des Weiteren ist es vorteilhaft, dass die Gleitschiene eine Ausnehmung aufweist, durch welche der Rastabschnitt des Riegelelements zumindest abschnittsweise hindurch ragt. Da die Gleitschiene die stationäre Schiene umgreift und die Zahnleiste an der stationären Schiene vorgesehen ist, ist der vorteilhafte Eingriff des Rastabschnitts in der Zahnleiste durch die Ausnehmung ermöglicht.

Nach einer vorteilhaften Ausführungsform umfasst die Arretiereinrichtung eine Rückstelleinrichtung, mittels welcher der Eingriff des Rastabschnitts in die Rastöffnungen der Zahnleiste und die Rotation der Betätigungseinrichtung rückstellbar sind. Vorteilhafterweise ist die Rückstelleinrichtung an der Gleitschiene angeordnet und mit dem Riegelelement verbunden. Vorteilhafterweise ist die Rückstelleinrichtung ein elastisches Element, beispielsweise ein Federelement oder ein Elastomerelement. Bevorzugt wirkt eine elastische Kraft, beziehungsweise eine Federkraft der Rotationsbewegung des Rastabschnitts um die zweite Rotationsachse nach oben entgegen. Demnach ist es von Vorteil, wenn die Rückstelleinrichtung mit dem Rastabschnitt oder in der Nähe des Ratsabschnitts mit dem Riegelelement verbunden ist. Vorteilhafterweise ist eine Rückstellung des Riegelelements, also entgegen der Rotation um die zweite Rotationsachse durch die Übertragungseinrichtung auf die Betätigungseinrichtung übertragbar. Diese erfolgt in umgekehrter Richtung durch die raft- und oder formschlüssigen Verbindungen des Riegelelements zu dem mittleren Element, beziehungsweise des mittleren Elements mit dem ersten Element, beziehungsweise dem ersten Element mit dem Hebelabschnitt der Betätigungseinrichtung. Durch eine solche Rückstellung wird eine automatische Arretierung der Konsoleneinrichtung bei einer Unterbrechung der Betätigung gewährleistet.

Nach einer weiteren vorteilhaften Ausführungsform umfasst die Schienenvorrichtung zwei entlang der Breitenachse Y voneinander beanstandete Schieneneinrichtungen. Demnach umfasst die Schienenvorrichtung zwei Gleitschienen, zwei stationäre Schienen und zwei Arretierungseinrichtungen. Durch eine derartige Ausgestaltung kann das Gewicht der Konsoleneinrichtung auf die beiden Schieneneinrichtungen verteilt werden, wodurch eine Verlagerung leichtläufiger wird. Vorzugsweise sind die Bügelabschnitte der Betätigungseinrichtungen durch ein Bügelelement miteinander verbunden, so dass die Betätigungseinrichtungen simultan betätigbar sind. Demnach sind durch nur eine Bewegung des Bügelelements beide Arretierungsvorrichtungen lösbar.

Nach einer vorteilhaften Ausführungsform ist eine Antriebsvorrichtung mit der Konsoleneinrichtung wirkverbunden, durch welche eine Verlagerung entlang der Längsrichtung X der Konsoleneinrichtung nach dem Lösen der Arretierung antreibbar ist. Vorzugsweise ist durch die Antriebsvorrichtung nach dem Lösen der Arretierung eine Verlagerung der Konsoleneinrichtung entlang der Längsrichtung X antreibbar. Eine solche Antriebsvorrichtung kann beispielsweise ein Federelement, eine Gasfeder, ein Stellantrieb oder Ähnliches sein. Nach dem Lösen der Arretierung durch die Betätigung der Betätigungseinrichtung kann demnach die Konsoleneinrichtung automatisch entlang der Längsachse X, also in den Innenraum der Fahrzeugkabine verlagert werden. Dabei ist es denkbar, dass lediglich das Ausziehen automatisch erfolgt, da eine Schubbewegung für den Nutzer leichter zu vollziehen ist. Mit der genannten Schubbewegung der Konsoleneinrichtung in die Cockpiteinrichtung könnte auch die benötigte Vorspannung in der Antriebsvorrichtung erzeugt werden, die bei dem nächsten Ausziehen benötigt wird.

Die Aufgabe wird weiterhin gelöst durch eine Cockpiteinrichtung mit einer Konsoleneinrichtung nach einer der vorhergehenden Ausführungsformen. Die Cockpiteinrichtung kann dabei mit allen bereits obig im Rahmen der Konsoleneinrichtung beschriebenen Merkmalen einzeln oder in Kombination miteinander ausgestattet sein und umgekehrt.

Die Aufgabe wird weiterhin gelöst durch eine Fahrzeugkabine für Nutzfahrzeuge, insbesondere LKW mit einer Cockpiteinrichtung und einer Konsoleneinrichtung nach einer der vorhergehenden Ausführungsformen. Die Fahrzeugkabine kann dabei mit allen bereits obig im Rahmen der Konsoleneinrichtung beschriebenen Merkmalen einzeln oder in Kombination miteinander ausgestattet sein und umgekehrt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: isometrische Ansichten der Konsoleneinrichtung nach einer Ausführungsform;
- Fig. 2: isometrische Ansichten der Konsoleneinrichtung nach einer Ausführungsform;
- Fig. 3: eine Seitenansicht der Konsoleneinrichtung nach einer Ausführungsform;
- Fig. 4: eine Draufsicht von unten der Konsoleneinrichtung nach einer Ausführungsform;
- Fig. 5: eine Ansicht der Konsoleneinrichtung und der Cockpiteinrichtung nach einer Ausführungsform;
- Fig. 6: eine Explosionsdarstellung der Schienenvorrichtung nach einer Ausführungsform;
- Fig. 7: eine Draufsicht von oben der Schienenvorrichtung nach einer Ausführungsform;
- Fig. 8: eine Draufsicht von unten der Schienenvorrichtung nach einer Ausführungsform;
- Fig. 9: eine Draufsicht von oben der Schienenvorrichtung nach einer Ausführungsform;
- Fig. 10a, b, c: Schnittansichten der Schienenvorrichtung nach einer Ausführungsform;
- Fig. 11: eine Vorderansicht der Schienenvorrichtung nach einer Ausführungsform;
- Fig. 12: ein Ausschnitt der Vorderansicht der Schienenvorrichtung nach einer Ausführungsform;
- Fig. 13: eine Vorderansicht der Schienenvorrichtung nach einer Ausführungsform;
- Fig. 14: ein Ausschnitt der Vorderansicht der Schienenvorrichtung nach einer Ausführungsform;
- Fig. 15: Ansicht der Schienenvorrichtung nach einer Ausführungsform in verschiedenen Verlagerungspositionen;
- Fig. 16a, b, c: Ansichten der Schienenvorrichtung nach einer Ausführungsform in verschiedenen Verlagerungspositionen;
- Fig. 17a, b, c: Ansichten der Schienenvorrichtung nach einer Ausführungsform in verschiedenen Verlagerungspositionen;
- Fig. 18: isometrische Ansicht der Konsoleneinrichtung nach einer Ausführungsform;

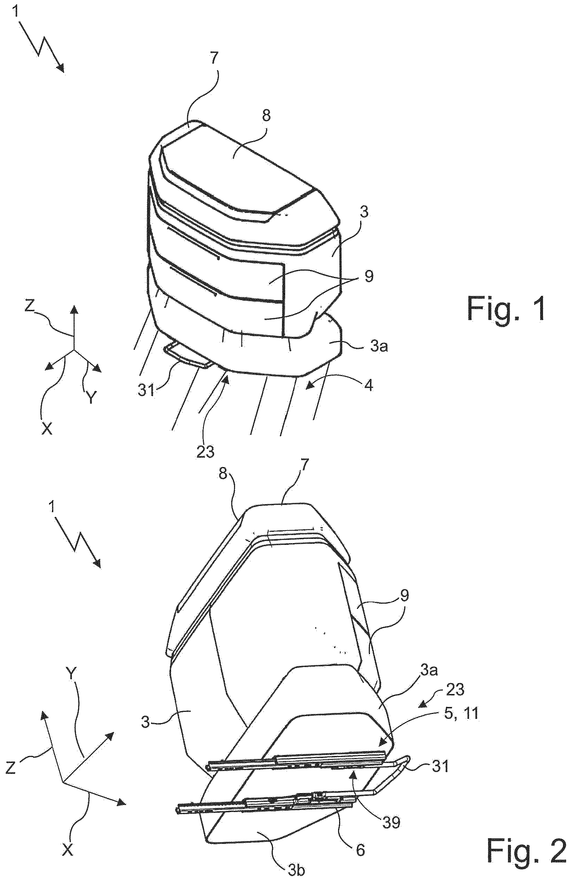

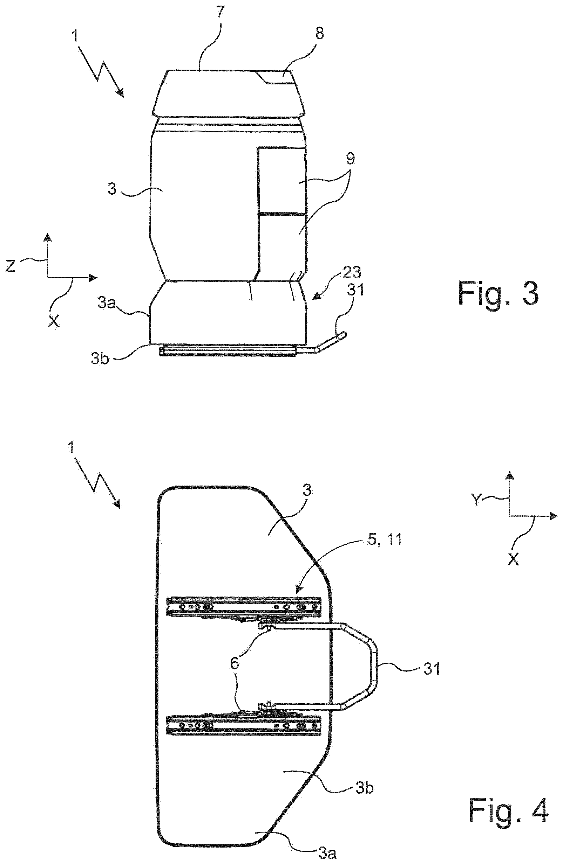

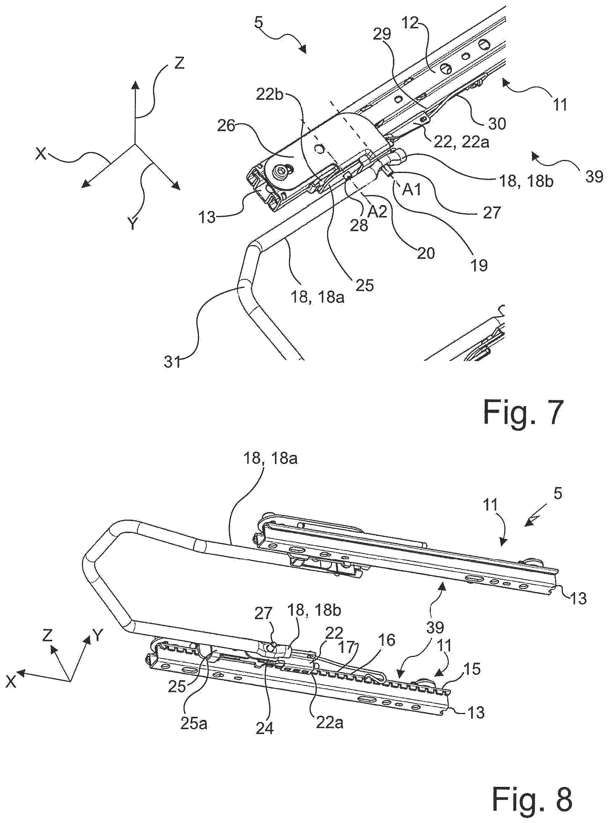

In den Figuren 1 bis 17c wird eine Konsoleneinrichtung 1 für eine Cockpiteinrichtung 2, insbesondere für Nutzfahrzeuge dargestellt, wobei die Konsoleneinrichtung 1 entlang einer Breitenachse Y' im Wesentlichen mittig zu der Cockpiteinrichtung 2 angeordnet und entlang einer Längsachse X' relativ zur Cockpiteinrichtung 2 verlagerbar ist, wobei ein Grundkörper 3 der Konsoleneinrichtung 1 an einer Fahrzeugkarosserie 4 mittels einer Schienenvorrichtung 5 anordenbar ist, wobei die Schienenvorrichtung 5 zumindest eine Arretierungseinrichtung 6 umfasst, welche eine Verlagerung der Konsoleneinrichtung 1 in einem Ruhezustand arretiert.

Die Konsoleneinrichtung erstreckt sich entlang der Höhenachse Z der Längsachse X und der Breitenachse Y. Die Fahrzeugkabine 33 und die Cockpiteinrichtung 2 erstrecken sich entlang der Höhenachse Z' der Längsachse X' und der Breitenachse Y'.

Die Figuren 1 bis 4 zeigen dabei eine entsprechende Konsoleneinrichtung 1. Der Grundkörper 3 der Konsoleneinrichtung 1 ist polygonförmig ausgebildet. Es ist erkennbar, dass dieser im Wesentlichen rechteckförmig ausgebildet ist, wobei die Seitenkanten entlang der Längsachse X nach vorne hin einen verjüngenden Abschnitt aufweisen. Ferner weist der Grundkörper eine entlang der Höhenachse Z obere Fläche 7 auf. Diese obere Fläche 7 ist als ein Ablageelement 8 ausgebildet. Das Ablageelement 8 kann zumindest einen Vertiefungsbereich aufweisen und kann entlang der Längsachse X relativ zu dem Grundkörper 3 verlagerbar sein. Dies ist in den Figuren nicht explizit dargestellt. In der oberen Fläche (7) des Grundkörpers (3) kann weiterhin ein Bedienbildschirm (10), ein Tabletcomputer oder eine Aufnahme für einen Tabletcomputer integriert sein.

Ferner kann der Grundkörper zumindest ein Schubladenelement 8 bevorzugt zwei Schubladenelemente 8 aufweisen. Kumulativ oder alternativ könnten auch Ablageflächen oder Ähnliches vorgesehen sein.

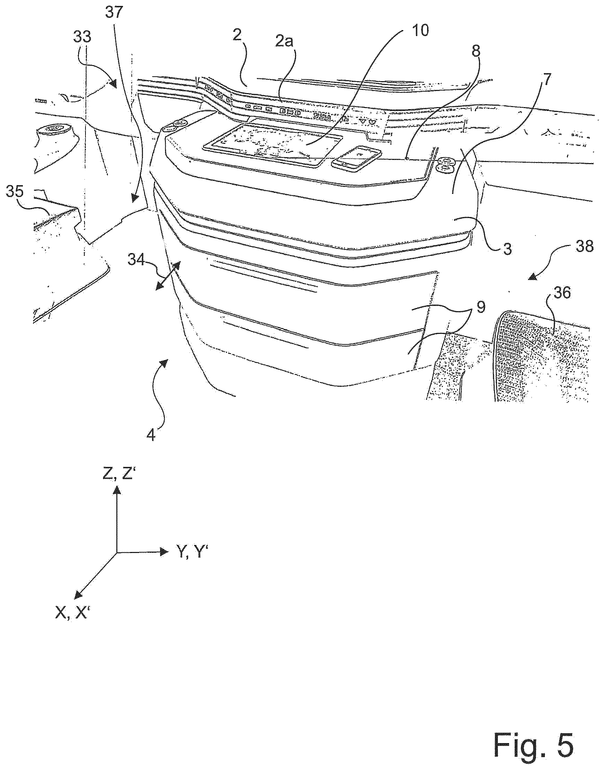

In der Figur 5 wird die Konsoleneinrichtung 1 und die Cockpiteinrichtung 2 innerhalb einer Fahrzeugkabine, insbesondere für LKW gezeigt. Dabei ist ersichtlich, dass die Konsoleneinrichtung oder auch Mittelkonsole 1 genannt, entlang des Doppelpfeiles 2 nach vorne oder nach hinten verschoben werden kann. Die Mittelkonsole 1 weist unterseitig Schubladen auf, die nach vorne ausgezogen werden können und somit Stauraum bilden.

Die Mittelkonsole 1 ist ebenso in ihrem oberen Bereich mit einer Ablagefläche bzw. einem Tisch 8 versehen, der vorzugsweise vertieft ausgebildet ist, um so selbst dann ein Tablet oder ein Mobiltelefon darauf angeordnet zu lassen, wenn die Mittelkonsole wieder nach vorne in den Armaturenbereich der Cockpiteinrichtung 2 hineingeschoben wird. Die Cockpiteinrichtung 2 umfasst dabei einen Abschnitt 2a, welcher in Höhenrichtung Z' über der Konsoleneinrichtung 1 angeordnet ist und sich entlang der Breitenachse Y erstreckt. Dabei ist es denkbar, dass die Konsoleneinrichtung 1 in ihrer Erstreckung entlang der Längsachse X vollständig in die Cockpiteinrichtung 2 hinein verlagerbar ist. Denkbar wäre jedoch auch, dass ein Abschnitt der Konsoleneinrichtung entlang der Längsachse X nach vorne, also in den Innenraum der Fahrzeugkabine über den Abschnitt 2a der Cockpiteinrichtung 2 hinausragt.

In Figur 5 sind weiterhin der Fahrersitz 35 und der Beifahrersitz 36 angedeutet. Die Konsoleneinrichtung 1 ist demnach mittig zwischen dem Fahrersitz 35 und dem Beifahrersitz 36 angeordnet und entlang der Längsachse X' verlagerbar. Ferner stellt die Konsoleneinrichtung 1 eine Abtrennung zwischen den Fußräumen der Fahrerseite 37 und der Beifahrerseite 38 dar.

Im ausgezogenen Zustand bildet die Mittelkonsole 1 vorteilhaft eine gute Ablagefläche für derartige Gegenstände und ist zwischen dem Fahrersitz 35 und dem Beifahrersitz 36 angeordnet.

Für das Heraus- und Hereinfahren einer derartigen Mittelkonsole 1 kann der Nutzfahrzeugboden Schienenelemente 5 aufweisen, auf denen die Mittelkonsole1 mittels Rollen, Gleitsteinen oder entsprechend komplementär ausgebildeten Führungsschienen verschoben werden kann.

Da im vorderen Armaturenbereich ohnehin häufig Platz vorhanden ist, der zumeist ungenutzt ist, kann vorteilhaft diese Mittelkonsole 1 nach vorne in den Armaturenbereich eingefahren werden und somit Platz freigeben, der zwischen den beiden Fahrersitzen 35, 36 gewünscht wird. Dieser freigewordene Platz dient dann beispielsweise dafür, um andere Gegenstände für deren Nutzung während des Stillstands des LKWs anzuordnen.

Vorteilhaft kann diese Mittelkonsole 1 auch im ausgezogenen Zustand als Tisch verwendet werden, um innerhalb der Nutzfahrzeugkabine 33 speisen zu können.

Der Grundkörper 3 der Konsoleneinrichtung 2 weist einen Basisabschnitt 3a auf, an dessen Unterseite 3b die Schienenvorrichtung 5 befestigt ist, welche zumindest eine Schieneneinrichtung (11) umfasst. In den Figuren ist ersichtlich, dass die Schienenvorrichtung 5 zwei entlang der Breitenachse Y beabstandete Schieneinrichtungen11 umfasst.

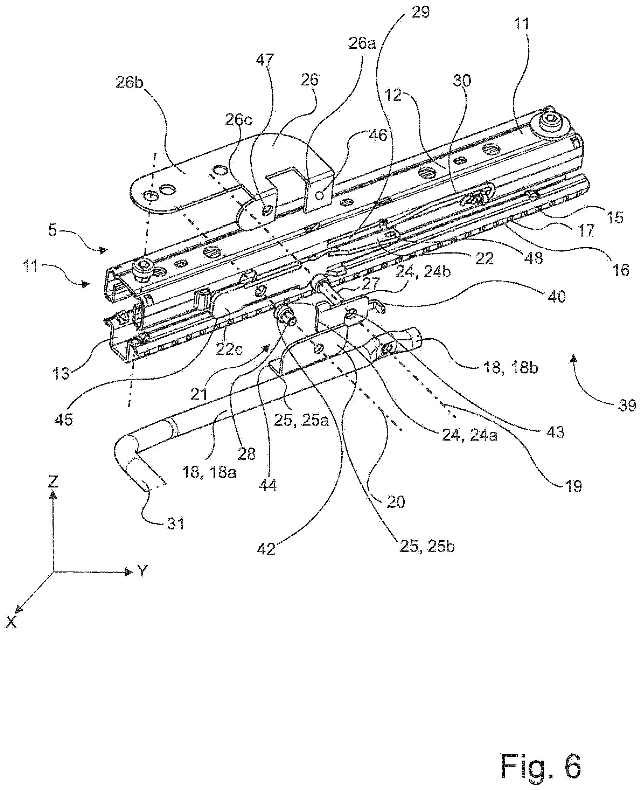

Jede Schieneneinrichtung 11 weist dabei eine Arretierungseinrichtung 6 auf, welche wiederum eine Betätigungseinrichtung 18 aufweist. Die Schienenvorrichtung 5, beziehungsweise die Schieneneinrichtungen 11 sind in den Figuren 6 bis 17c gut ersichtlich.

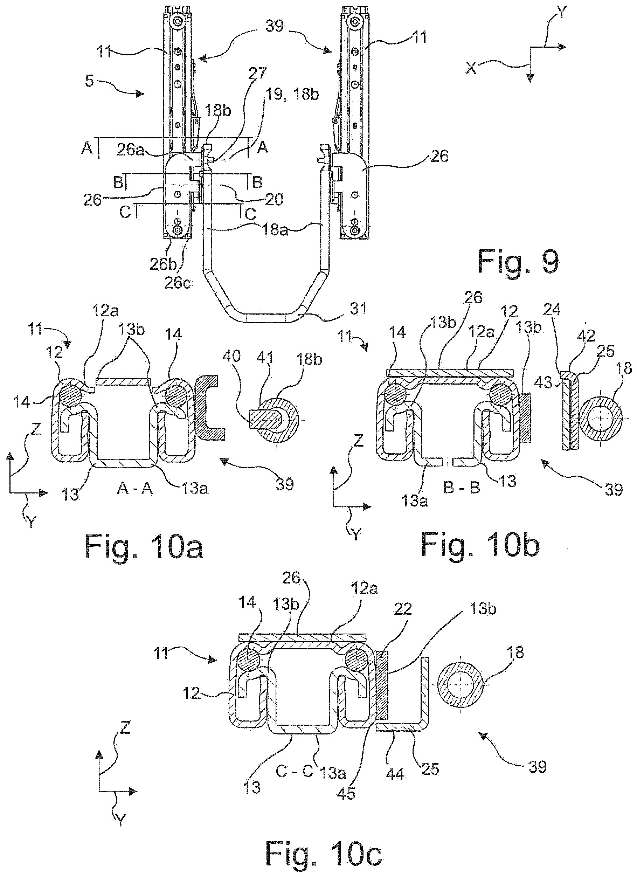

Eine Schieneneinrichtung 11 weist eine obere im Wesentlichen U-förmig ausgebildete Gleitschiene 12 und eine im Wesentlichen U-förmig ausgebildete untere stationäre Schiene 13 auf. Ein Querschnitt der Gleitschiene 12 und der stationären Schiene 13 sind in den Figuren 10a bis 10c ersichtlich. Die stationäre Schiene 13 ist an dem Fahrzeugkabinenboden beziehungsweise der Fahrzeugkarosserie befestigt. Die Begriffe Fahrzeugkabinenboden und Fahrzeugkarosserie werden hier als Synonym betrachtet. Weiterhin umfasst die stationäre Schiene 13 einen U-förmigen Grundkörper 13a an dessen entlang der Höhenachse Z oberen Ende sich nach außen erstreckend Lagerarme 13b befinden. Auf den Lagerarmen 13b ist jeweils ein Lagerungselement 14 angeordnet, welches einen kreisförmigen Querschnitt aufweist und vorzugsweise aus einem elastischen Material besteht.

Die Gleitschiene 12 umgreift die stationäre Schiene 13. Die Gleitschiene 12 umfasst hierbei einen U förmigen Grundkörper 12a, an dessen Schenkelen U-förmige Endabschnitte 12 b angeformt sind. In diesen Endabschnitten 12b sind die Lagerarme 13b der stationäre Schiene 13 angeordnet. Ferner ist das Lagerungselement 14 an dem Grundkörper 12a anliegend.

An der stationären Schiene 13 ist zumindest eine Zahnleiste 15 vorgesehen. Diese Zahnleiste ist an einer innenliegenden Seite 39 der Schieneneinrichtung 11 beziehungsweise der stationären Schiene13 vorgesehen. Innenliegend soll hierbei bedeuten, dass die Zahnleiste jeweils in Richtung zu der gegenüberliegenden Schieneneinrichtung 11 angeordnet ist. Dementsprechend sind auch die jeweiligen Arretierungseinrichtungen 6 an den sich gegenüberliegenden inneren Seiten der Schieneneinrichtung 11 angeordnet. Die kammartig ausgebildete Zahnleiste 15 ist an dem entsprechend innenliegenden Lagerarm 13b angeformt oder befestigt. Dabei ist die Zahnleiste entlang der Höhenachse Z unter einer oberen Fläche des Lagerarms 13b vorgesehen, auf welchem das Lagerungselement 14 aufliegt. Die Zahnleiste 15 weist eine Vielzahl von Zähnen 16 und zwischen den Zähnen angeordnete, nach außen offene Rastöffnungen 17, auf. Die Zähne 16 ragen entlang der Höhenachse Z nach unten. Dementsprechend sind die Rastöffnungen 17 ebenso entlang der Höhenachse Z nach unten offen.

Die Gleitschiene 12 und die stationäre Schiene 13 sind vorzugsweise aus einem geeigneten Metall, beziehungsweise einer geeigneten Metalllegierung, beispielsweise einer Aluminiumlegierung gefertigt.

Die Betätigungseinrichtung 18 ist zumindest abschnittsweise um eine erste Rotationsachse 19 rotierbar. Mittels einer Übertragungseinrichtung 21 ist diese erste Rotationbewegung in eine zweite Rotationsbewegung eines Riegelelements 22 um eine zweite Rotationsachse 20 übertragbar. Durch diese zweite Rotationsbewegung eines Riegelelements 22 ist die Arretierung der Schienenvorrichtung (5) lösbar. In dem Ruhezustand greift ein Rastabschnitt 22a des Riegelelements 22 in die Rastöffnungen 17 der Zahnleiste 15. Durch diesen Eingriff ist eine Verlagerung der Gleitschiene 12 relativ zur stationären Schiene 13 nicht mehr möglich. Durch die zweite Rotationsbewegung wird nun der Rastabschnitt 22a entlang der Höhenachse Z nach unten bewegt, wodurch der Eingriff gelöst wird. Die Gleitschiene 12 lässt sich nun relativ zur stationären Schiene 13 verlagern und die Konsoleneinrichtung 1 kann entlang der Längsrichtung X' verlagert werden.

Die Betätigungseinrichtung 18 ist in einem entlang der Höhenachse Z unteren Bereich 23 der Konsoleneinrichtung 1 angeordnet. Eine Rotation der Betätigungseinrichtung 18 entlang der Höhenachse Z nach unten verursacht eine Rotation des Rastabschnitts 22a des Riegelelements 22 entlang der Höhenachse Z nach unten, wodurch der Eingriff des Rastabschnitts 22a in die Rastöffnungen 17 der Zahnleiste 15 gelöst wird und die Arretierung der Konsoleneinrichtung 1 gelöst wird. Durch eine derartige Ausgestaltung kann die Arretierung der Konsoleneinrichtung möglichst einfach durch eine Trittbewegung mit dem Fuß nach unten gelöst werden.

Die Betätigungseinrichtung 18 weist einen Bügelabschnitt 18a, welcher entlang der Längsachse X vor der ersten Rotationsachse 19 liegt, und einen Hebelabschnitt 18b, welcher entlang der Längsachse X hinter der ersten Rotationsachse 19 liegt, auf. Die Arretierungseinrichtungen 5 und die entsprechenden Betätigungseinrichtungen 18 der beiden Schieneneinrichtungen 11 der Schienenvorrichtung 5 sind gegenüberliegend derart angeordnet, dass die erste 19 und die zweite 20 Rotationsachse der ersten Schieneneinrichtung 11 mit der ersten 19 und der zweite 20 Rotationsachse der zweiten Schieneneinrichtung 11 deckungsgleich sind. Ferner liegen die Arretierungseinrichtungen 5 und die entsprechenden Betätigungseinrichtungen 18 an den jeweiligen innenliegenden Seite 39 der jeweiligen Schieneneinrichtung 11.

Die Bügelabschnitte 18a der beiden Betätigungseinrichtungen 18 gehen in das Bügelelement 31 über. Hierdurch sind die Betätigungseinrichtungen 18 mittel dem Bügelelement 31 simultan betätigbar. Das Bügelelement 31 ragt entlang der Längsachse X über den Grundkörper 3 der Konsoleneinrichtung 1 hinaus. Das Bügelelement 31 umfasst dabei einen Abschnitt, welcher schräg entlang der Höhenachse Z nach oben verläuft. Ferner umfasst das Bügelelement 31 einen horizontalen Abschnitt, welcher von dem Nutzer betätigt wird. Dieser horizontale Abschnitt ist im unteren Bereich 29 der Konsoleneinrichtung 1 angeordnet. Vorzugsweise ist die Höhe des horizontalen Abschnitts bis zu 40 cm über dem Fahrzeugkabinenboden, weiter bevorzugt bis zu 30 cm über dem Fahrzeugkabinenboden, weiter bevorzugt bis zu 20 cm über dem Fahrzeugkabinenboden angeordnet.

Die Betätigungseinrichtung 18 und das Bügelelement 31 sind dabei rohrförmig ausgebildet.

Der Hebelabschnitt 18b einer Betätigungseinrichtung 18 ist mit einem hinteren Abschnitt 24b eines ersten Elements 24 der Übertragungseinrichtung 21 kraft- und/oder formschlüssig verbunden. Eine solche Verbindung kann durch einen am ersten Element 24 angeordneten, beziehungsweise am ersten Element 24 ausgeformten Verbindungszapfen 40 erfolgen. Der Verbindungszapfen 40 ist in einer Bohrung 41 des rohrförmigen Hebelabschnitt 18b der Betätigungseinrichtung 18 angeordnet. Dies ist beispielsweise in Figur 10a gut zu erkennen, welche eine Schnittdarstellung entlang der Achse A-A aus der Figur 9 ist.

Das erste Element 24 ist im Wesentlichen rechteckförmig und blattartig ausgestaltet, wobei unter blattartig eine vergleichsweise dünne Tiefe des Elements verstanden werden soll, welche jedoch noch ausreichend ist, um die erforderliche Stabilität des Elements zu gewährleisten. Darüber hinaus sind das erste Element 24 und die Betätigungseinrichtung 18 um die erste Rotationsachse 19 rotierbar.

Ein vorderer Abschnitt 24a des ersten Elements 24 ist mit einem hinteren Abschnitt 25b eines mittleren Elements 25 kraft- und/oder formschlüssig verbunden. Diese Verbindung wird durch einen sich entlang der Breitenachse Y erstreckenden Vorsprung 42 an dem ersten Element 24 realisiert, welcher an einem hinteren Kantenabschnitt 43 aufliegt. Dies ist beispielsweise in Figur 10b gut zu erkennen, welche eine Schnittdarstellung entlang der Achse B-B aus der Figur 9 ist. Durch die Rotation des ersten Elements 24 wird eine entsprechende Hebelwirkung auf den oberen hinteren Abschnitt 25b des mittleren Elements 25 ausgeübt.

Ein vorderer Abschnitt 25a des mittleren Elements 25 ist mit einem vorderen Abschnitt 22b des Riegelelements 22 kraft- und/oder formschlüssig verbunden. Diese Verbindung wird durch einen sich entlang der Breitenachse Y erstreckenden Vorsprung 44 des mittleren Elements 25 realisiert, welcher an einem unteren vorderen Kantenabschnitt 45 des Riegelelements 22 anliegt. Dies ist beispielsweise in Figur 10c gut zu erkennen, welche eine Schnittdarstellung entlang der Achse C-C aus der Figur 9 ist.

Das mittleren Elements 25 ist im Wesentlichen rechteckförmig und blattartig ausgestaltet, wobei unter blattartig eine vergleichsweise dünne Tiefe des Elements verstanden werden soll, welche jedoch noch ausreichend ist, um die erforderliche Stabilität des Elements zu gewährleisten. Darüber hinaus sind das mittleren Element 25 und das Riegelelement 22 um die zweite Rotationsachse 20 rotierbar. Durch die Rotation des mittleren Elements 25 wird eine entsprechende Hebelwirkung auf den vorderen Kantenabschnitt 45 des Riegelelements 22 ausgeübt.

Die Arretierungseinrichtung 6 umfasst ein Befestigungselement 26, welches an der Gleitschiene 12 befestigt ist. An dem Befestigungselement 26 ist eine erste Lagerungseinrichtung 27 angeordnet, an welcher die Betätigungseinrichtung 18 und das erste Element 24 der Übertragungseinrichtung 21 rotierbar, um die erste Rotationsachse 19 angeordnet sind. Die Lagerungseinrichtung ist in Form einer Lagerungswelle ausgebildet, welche in einer ersten Bohrung 46, des Befestigungselements 26 angeordnet ist. Diese erste Bohrung 46 ist in einem ersten gewinkelten Abschnitt 26a des Befestigungselements 26 vorgesehen, welcher von der Gleitschiene 12 aus nach innen, also in Richtung zu der weiteren Schieneneinrichtung 11, ragt. Ein Hauptabschnitt 26b des Befestigungselements 26 ist mittels einer Schraubverbindung an der Oberseite der Gleitschien 12 angeordnet.

Das Riegelelement 22 und das mittlere Element 25 der Übertragungseinrichtung 21 sind mittels einer zweiten Lagerungseinrichtung 28 an der Gleitschiene 12 angeordnet. Diese zweite Lagerungseinrichtung 28 ist eine Lagerungswelle, welche in einer zweiten Bohrung 47 des Befestigungselements 26 angeordnet ist. Diese zweite Bohrung 47 ist in einem zweiten gewinkelten Abschnitt 26c des Befestigungselements 26 vorgesehen, welcher von der Gleitschiene 12 aus nach innen also in Richtung zu der weiteren Schieneneinrichtung 11, ragt. In Figur 9 ist ersichtlich, dass der erste gewinkelten Abschnitt 26a des Befestigungselements 26 einen größeren Abstand zur Gleitschiene 12 aufweist als der zweite gewinkelten Abschnitt 26c des Befestigungselements 26.

Die Gleitschiene 12 weist eine Ausnehmung 29 auf, durch welche der Rastabschnitt 22a des Riegelelements 22 zumindest abschnittsweise hindurch ragt. Diese Ausnehmung 29 ist an dem innenliegenden Endabschnitt 12b der Gleitschiene 12 vorgesehen. Durch die Ausnehmung kann der Rastabschnitt 22a zu der Zahnleiste 5 gelangen und in diese eingreifen.

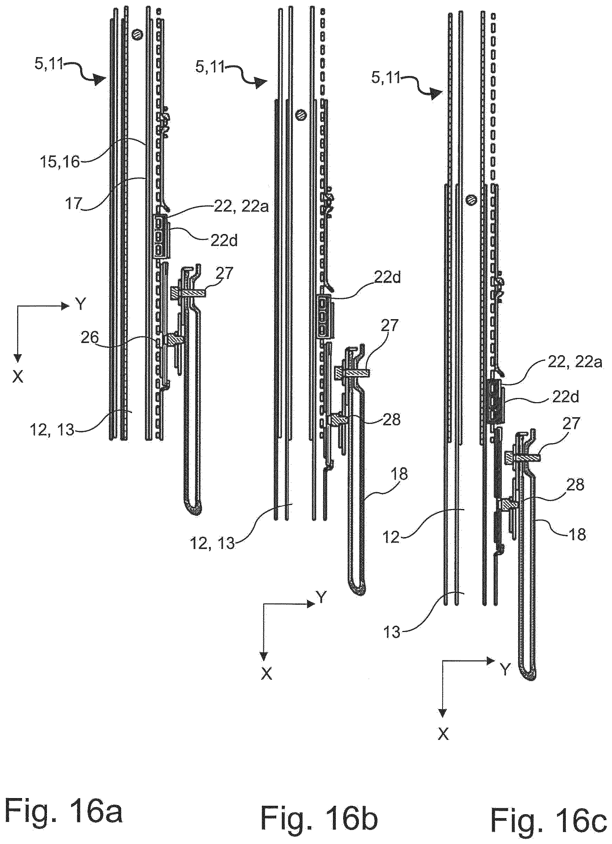

Das Riegelelement 22 ist im Wesentlichen rechteckförmig und blattartig ausgestaltet, wobei unter blattartig eine vergleichsweise dünne Tiefe des Elements verstanden werden soll, welche jedoch noch ausreichend ist, um die erforderliche Stabilität des Elements zu gewährleisten. Der Rastabschnitt 22a ist dabei vorzugsweise in einem rechten Winkel zu dem Hauptabschnitt 22c des Riegelelements 22 angeordnet. Der Rastabschnitt 22a kann dabei zumindest ein bevorzugt drei Ausnehmungen 22d aufweisen, in welchen die Zähne 16 der Zahnleiste 15 angeordnet sind, wodurch der Eingriff realisiert wird. Dies ist in den Figuren 16a, 16b, 16c erkennbar.

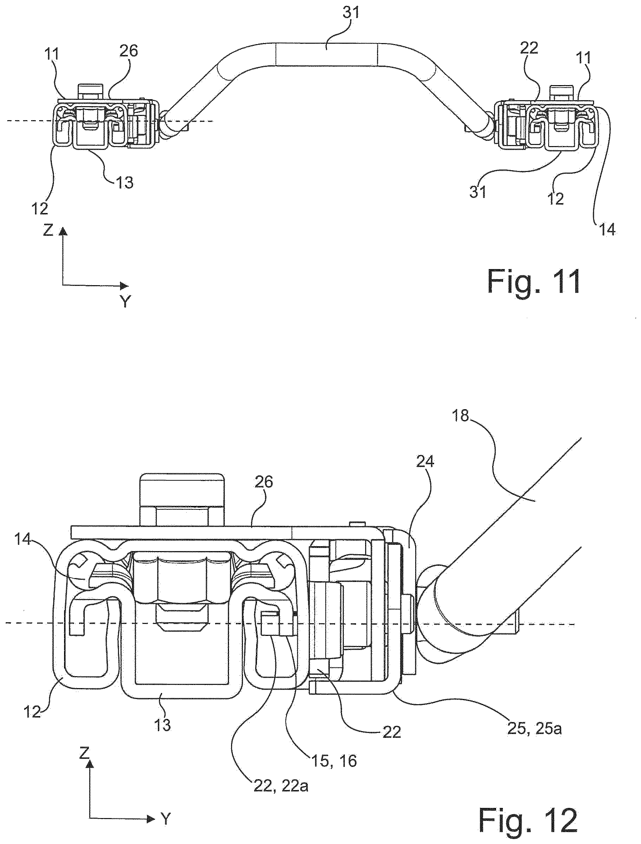

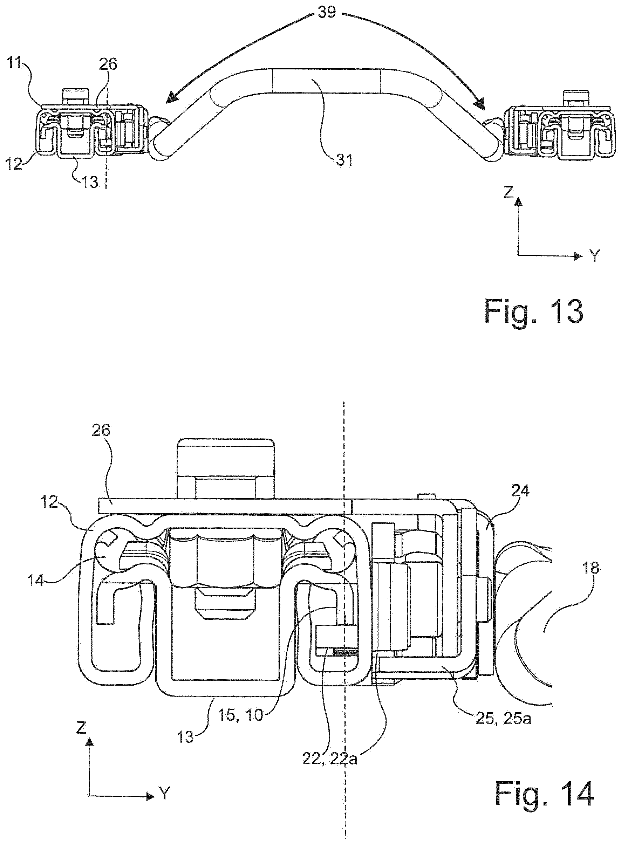

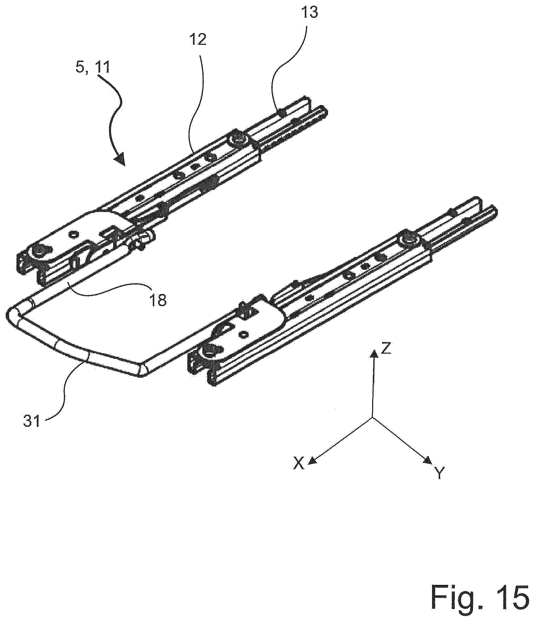

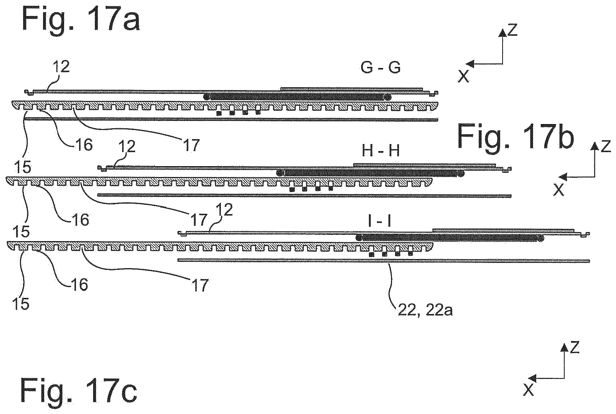

Ein Herunterdrücken des Bügelabschnitts 31 verursacht somit eine Rotation des Hebelabschnitts 18b der Betätigungseinrichtung 18 entlang der Höhenachse Z nach oben. Durch die Verbindung mit dem hinteren Abschnitt 24b eines ersten Elements 24 der Übertragungseinrichtung 21 wird dieser hintere Abschnitt 24b entsprechend entlang der Höhenachse Z nach oben verlagert. Gleichzeitig rotiert der vordere Abschnitt 24a des ersten Elements 24, welcher dem hinteren Abschnitt 24b gegenüberliegt, um die erste Rotationsachse 19 entlang der Höhenachse Z nach unten. Durch die Verbindung mit dem hinteren Abschnitt 25b des mittleren Elements 25 der Übertragungseinrichtung 21, wird dieser hintere Abschnitt 25 entsprechend entlang der Höhenachse Z nach unten verlagert. Gleichzeitig rotiert der vordere Abschnitt 25a des mittleren Elements 25 um die zweite Rotationsachse 20 entlang der Höhenachse Z nach oben. Durch die Verbindung mit dem vorderen Abschnitt 22b des Riegelelements 22 wird dieser vordere Abschnitt 22b entsprechend entlang der Höhenachse Z nach oben verlagert. Demzufolge rotiert der gegenüberliegende Rastabschnitt 22a des Riegelelements 22 um die zweite Rotationsachse 20 entlang der Höhenachse Z nach unten. Durch diese Rotation wird der Eingriff des Rastabschnitts 22a in der Zahnleiste15 gelöst und die Konsoleneinrichtung 1 kann verlagert werden. In der Figur 11 ist eine Vorderansicht der Arretierungseinrichtung 5 gezeigt, wobei die Schieneneinrichtungen 11 im Schnitt dargestellt sind. Die Figur 12 stellt dabei einen vergrößerten Ausschnitt einer Schieneneinrichtung darstellt. In diesen Figuren ist deutlich erkennbar, wie der Rastabschnitt 22a in die Zahnleiste 15 eingreift. Analog ist in der Figur 13 eine Vorderansicht der Arretierungseinrichtung 5 gezeigt, wobei die Schieneneinrichtungen 11 im Schnitt dargestellt sind. Die Figur 14 stellt dabei einen vergrößerten Ausschnitt einer Schieneneinrichtung dar. Im Gegensatz zu den Figuren 11 und 12 ist in diesen Figuren deutlich erkennbar, wie der Eingriff das Rastabschnitts 22a in der Zahnleiste 15 gelöst ist. In den Figuren 15, 16a, 16b, 16c, 17a, 17b, 17c sind verschiedene Verlagerungspositionen der Schienenvorrichtung 5 zu erkennen. In den Figuren 16a, 17a ist dabei die Schienenvorrichtung vollständig eingezogen. In den Figuren 15, 16b, 17b ist eine mittlere Verlagerungsposition der Schienenvorrichtung dargestellt. In den Figuren 16c, 17c ist eine maximal ausgezogene Verlagerungsposition der Schienenvorrichtung dargestellt. Dabei ist in den Figuren 16a, 16b, 16c die entsprechende Position arretiert, d. h. der Rastabschnitt 22a greift in die Zahnleiste 15 ein. In den Figuren 17a, 17b, 17c ist die Arretierung in der entsprechenden Position gelöst, d. h. der Rastabschnitt 22a greift nicht in die Zahnleiste 15 ein.

Die Arretiereinrichtung 6 umfasst weiterhin eine Rückstelleinrichtung 30, mittels welcher der Eingriff des Rastabschnitts 22a in die Rastöffnungen 17 der Zahnleiste 15 und die Rotation der Betätigungseinrichtung 18 um die erste Rotationsachse 19 rückstellbar sind. Die Rückstelleinrichtung 30 ist in Form eines Federelements an der Gleitschiene 12 angeordnet und mit dem Riegelelement 22 verbunden. In der Figur 6 ist erkennbar wie die Rückstelleinrichtung 30 in eine Bohrung 48 an dem Riegelelement 22 eingreift. Durch die Rotation des hinteren Abschnitts, beziehungsweise des Rastabschnitts 22a des Riegelelement 22, wird die Rückstelleinrichtung 30 in Form eines Federelements gespannt. Nachdem der Nutzer die Verlagerung der Konsoleneinrichtung 1 getätigt hat, wird dieser die Betätigungseinrichtung 18 entlasten. Durch die Federkraft der Rückstelleinrichtung wird der hintere Abschnitt, beziehungsweise der Rastabschnitt 22a des Riegelelements 22 nach oben gedrückt, wodurch der Rastabschnitt wieder in die Zahnleiste 15 eingreift. Die Federkraft kann durch die Übertragungseinrichtung 21 in umgekehrter Richtung wieder auf das Bügelelement 31 übertragen werden, wodurch diese wieder in seine ursprüngliche Position zurückverlagert wird. Dazu drückt der vordere Abschnitt 22b des Riegelelements 22 den vorderen Abschnitt 25a des mittleren Elements 25 nach unten. Hierdurch wird der hintere Abschnitt 25b des mittleren Elements 25 nach oben verlagert. Somit wird der vordere Abschnitt 24a des ersten Elements 24 nach oben verlagert, wodurch wiederum der hintere Abschnitt 25b nach unten rotiert. Schließlich rotiert hierdurch der Hebelabschnitt 18b nach unten und der Bügelabschnitt 18a nach oben.

Wie bereits beschrieben muss der Nutzer das Bügelelement während der Verlagerung der Konsoleneinrichtung 1 nach unten gedrückt halten. Die Verlagerung kann der Nutzer manuel vornehmen.

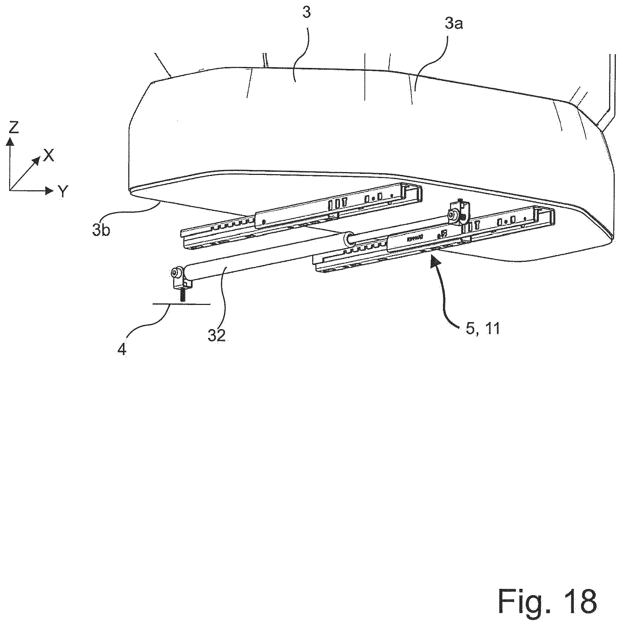

Gemäß den Ausführungsform nach Figur 18 kann die Konsoleneinrichtung 1 mit einer Antriebsvorrichtung wirkverbunden sein. Durch die Antriebsvorrichtung 32 ist nach dem Lösen der Arretierung eine Verlagerung der Konsoleneinrichtung 1 entlang der Längsrichtung X antreibbar. Eine solche Antriebsvorrichtung 32 kann zwischen dem Grundkörper 3 der Konsoleneinrichtung 1 und dem Fahrzeugkabinenboden 4 oder zwischen dem Grundkörper 3 und der Cockpiteinrichtung 2 angeordnet sein. Die Antriebsvorrichtung kann beispielsweise eine Federvorrichtung, einen Gasfeder- oder ein Stellantrieb sein. Hierdurch kann das Herausfahren der Konsoleneinrichtung 1 aus der Cockpiteinrichtung 2 automatisch erfolgen, solange die Schienenvorrichtung entriegelt ist. In der Figur 18 ist dabei aus Übersichtlichkeitsgründen die Arretierungseinrichtung nicht gezeigt.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Konsoleneinrichtung
- 2: Cockpiteinrichtung
- 2a: Abschnitt der Cockpiteinrichtung
- 3: Grundkörper der Konsoleneinrichtung
- 3a: Basisabschnitt des Grundkörpers
- 3b: Unterseite des Basisabschnitts
- 4: Fahrzeugkarosserie
- 5: Schienenvorrichtung
- 6: Arretierungseinrichtung
- 7: obere Fläche des Grundkörpers
- 8: Ablageelement
- 9: Schubladenelement
- 10: Bedienbildschirm
- 11: Schieneneinrichtung
- 12: Gleitschiene
- 12a: Grundkörper der Gleitschiene
- 12b: Endabschnitte der Gleitschiene
- 13: stationäre Schiene
- 13a: Grundkörper der stationären Schiene
- 13b: Lagerarme der stationären Schiene
- 14: Lagerungselement
- 15: Zahnleiste
- 16: Zähne
- 17: Rastöffnungen
- 18: Betätigungseinrichtung
- 18a: Bügelabschnitt
- 18b: Hebelabschnitt
- 19: erste Rotationsachse
- 20: zweite Rotationsachse
- 21: Übertragungseinrichtung
- 22: Riegelelements
- 22a: Rastabschnitt des Riegelelements
- 22b: vorderer Abschnitt des Riegelelements
- 22c: Hauptabschnitt des Riegelelements
- 22d: Ausnehmungen in dem Rastabschnitt
- 23: unteren Bereich der Konsoleneinrichtung
- 24: erstes Element der Übertragungseinrichtung
- 24a: vorderer Abschnitt des ersten Elements
- 24b: hinterer Abschnitt des ersten Elements
- 25: mittleres Element der Übertragungseinrichtung
- 25a: vorderer Abschnitt des mittleren Elements
- 25b: hinterer Abschnitt des mittleren Elements
- 26: Befestigungselement
- 26a: erster gewinkelter Abschnitt des Befestigungselements
- 26b: Hauptabschnitt des Befestigungselements
- 26c: zweiter gewinkelter Abschnitt des Befestigungselements
- 27: erste Lagerungseinrichtung
- 28: zweite Lagerungseinrichtung
- 29: Ausnehmung der Gleitschiene
- 30: Rückstelleinrichtung
- 31: Bügelelement
- 32: Antriebsvorrichtung
- 33: Fahrzeugkabine
- 34: Doppelpfeil
- 35: Fahrersitz
- 36: Beifahrersitz
- 37: Fußraum der Fahrerseite
- 38: Fußraum der Beifahrerseite
- 39: innenliegende Seite der Schieneneinrichtung
- 40: Verbindungszapfen
- 41: Bohrung des Hebelabschnitts
- 42: Vorsprung an dem ersten Element
- 43: hinterer Kantenabschnitt des mittleren Elements
- 44: Vorsprung des mittleren Elements
- 45: vorderer Kantenabschnitt des Riegelelements
- 46: erste Bohrung an dem Befestigungselement
- 47: zweite Bohrung an dem Befestigungselement
- 48: Bohrung an dem Riegelelement
- X: Längsachse
- Y: Breitenachse
- Z: Höhenachse
- X': Längsachse
- Y': Breitenachse
- Z': Höhenachse

## Patentansprüche

1. Konsoleneinrichtung (1) für eine Cockpiteinrichtung (2) insbesonde für Nutzfahrzeuge, wobei die Konsoleneinrichtung (1) entlang einer Breitenachse Y' im Wesentlichen mittig zu der Cockpiteinrichtung (2) angeordnet und entlang einer Längsachse X' relativ zur Cockpiteinrichtung (2) verlagerbar ist, wobei ein Grundkörper (3) der Konsoleneinrichtung (1) an einer Fahrzeugkarosserie (4) mittels einer Schienenvorrichtung (5) anordenbar ist, wobei die Schienenvorrichtung (5) zumindest eine Arretierungseinrichtung (6) umfasst, welche eine Verlagerung der Konsoleneinrichtung (1) in einem Ruhezustand arretiert,
**dadurch gekennzeichnet, dass**
die Schienenvorrichtung (5) zumindest eine Schieneneinrichtung (11) umfasst, welche eine im Wesentlichen U-förmig ausgebildete Gleitschiene (12) und eine im Wesentlichen U-förmig ausgebildete stationäre Schiene (13) aufweist, wobei die Gleitschiene (12) die stationäre Schiene (13) zumindest abschnittsweise umgreift und relativ zu der stationären Schiene (13) verlagerbar ist, wobei zumindest ein Lagerungselement (14) zwischen der Gleitschiene (12) und der stationären Schiene (13) angeordnet ist, wobei an der stationären Schiene (13) zumindest eine Zahnleiste (15) vorgesehen ist, wobei die Zahnleiste (15) eine Vielzahl von Zähnen (16) und zwischen den Zähnen angeordnete nach außen offene Rastöffnungen (17) aufweist.

2. Konsoleneinrichtung (1) nach Anspruch 1,
**dadurch gekennzeichnet, dass**
der Grundkörper (3) eine entlang der Höhenachse Z obere Fläche (7) aufweist, wobei die obere Fläche (7) als ein Ablageelement (8) ausgebildet ist, wobei das Ablageelement (8) zumindest einen Vertiefungsbereich aufweist, wobei das Ablageelement (8) entlang der Längsachse X relativ zu dem Grundkörper (3) verlagerbar ist, wobei in dem Grundkörper (3) zumindest ein Schubladenelement (9) verlagerbar angeordnet ist.

3. Konsoleneinrichtung (1) nach Anspruch 2,
**dadurch gekennzeichnet, dass**
in der oberen Fläche (7) des Grundkörpers (3) ein Bedienbildschirm (10), ein Tabletcomputer oder eine Aufnahme für einen Tabletcomputer integriert ist.

4. Konsoleneinrichtung (1) nach einem der vorhergehenden Ansprüche,
**dadurch gekennzeichnet, dass**
die Arretierungseinrichtung (6) eine Betätigungseinrichtung (18) umfasst, welche zumindest abschnittsweise um eine erste Rotationsachse (19) rotierbar ist, wobei mittels einer Übertragungseinrichtung (21) diese erste Rotationbewegung in eine zweite Rotationsbewegung eines Riegelelements (22) um eine zweite Rotationsachse (20) übertragbar ist, wodurch die Arretierung der Schienenvorrichtung (5) lösbar ist, wobei in einem Ruhezustand ein Rastabschnitt (22a) des Riegelelements (22) in die Rastöffnungen (17) der Zahnleiste (15) eingreift.

5. Konsoleneinrichtung (1) nach Anspruch 4,
**dadurch gekennzeichnet, dass**
die Betätigungseinrichtung (18) in einem entlang der Höhenachse Z unteren Bereich (23) der Konsoleneinrichtung (1) angeordnet ist, wobei eine Rotation der Betätigungseinrichtung (18) entlang der Höhenachse Z nach unten eine Rotation des Rastabschnitts (22a) des Riegelelements (22) entlang der Höhenachse Z nach unten verursacht, wodurch der Eingriff des Rastabschnitts (22a) in die Rastöffnungen (17 der Zahnleiste (15) gelöst wird und die Arretierung der Konsoleneinrichtung (1) gelöst wird.

6. Konsoleneinrichtung (1) nach einem der Ansprüche 4 oder 5,
**dadurch gekennzeichnet, dass**
die Betätigungseinrichtung (18) einen Bügelabschnitt (18a), welcher entlang der Längsachse X vor der ersten Rotationsachse (19) liegt, und einen Hebelabschnitt (18b), welcher entlang der Längsachse X hinter der ersten Rotationsachse (19) liegt, aufweist, wobei der Hebelabschnitt (18b) mit einem hinteren Abschnitt (24b) eines ersten Elements (24) der Übertragungseinrichtung (21) kraft- und/oder formschlüssig verbunden ist, wobei das erste Element (24) um die erste Rotationsachse (19) rotierbar ist, wobei ein vorderer Abschnitt (24a) des ersten Elements (24) mit einem hinteren Abschnitt (25b) eines mittleren Elements (25) kraft- und/oder formschlüssig verbunden ist, wobei das mittlere Element (25) um eine zweite Rotationsachse (20) rotierbar ist, wobei ein vorderer Abschnitt (25a) des mittleren Elements (25) mit einem vorderen Abschnitt (22b) des Riegelelements (22) kraft- und/oder formschlüssig verbunden ist.

7. Konsoleneinrichtung (1) nach einem der Ansprüche 4 bis 6,
**dadurch gekennzeichnet, dass**
die Arretierungseinrichtung (6) ein Befestigungselement (26) umfasst, welches an der Gleitschiene (12) befestigt ist, wobei an dem Befestigungselement (26) eine erste Lagerungseinrichtung (27) angeordnet ist, an welcher die Betätigungseinrichtung (18) und das erste Element (24) der Übertragungseinrichtung (21) rotierbar, um die erste Rotationsachse (19), angeordnet sind, wobei das Riegelelement (22) und das mittlere Element (25) der Übertragungseinrichtung (21) mittels einer zweiten Lagerungseinrichtung (28) an der Gleitschiene (12) angeordnet sind, wobei die Gleitschiene (12) eine Ausnehmung (29) aufweist, durch welche der Rastabschnitt (22a) des Riegelelements (22) zumindest abschnittsweise hindurch ragt.

8. Konsoleneinrichtung (1) nach einem der Ansprüche 4 bis 7,
**dadurch gekennzeichnet, dass**
die Arretiereinrichtung (6) eine Rückstelleinrichtung (30) umfasst, mittels welcher der Eingriff des Rastabschnitts (22a) in die Rastöffnungen (17) der Zahnleiste (15) und die Rotation der Betätigungseinrichtung (18) um die erste Rotationsachse (19) rückstellbar sind, wobei die Rückstelleinrichtung (30) an der Gleitschiene (12) angeordnet ist und mit dem Riegelelement (22) verbunden ist, wobei eine Rückstellung des Riegelelements (22) durch die Übertragungseinrichtung (21) auf die Betätigungseinrichtung (18) übertragbar ist.

9. Konsoleneinrichtung (1) nach einem der Ansprüche 3 bis 6,
**dadurch gekennzeichnet, dass**
die Schienenvorrichtung (5) zwei entlang der Breitenrichtung Y voneinander beabstandete Schieneneinrichtungen (11) umfasst, wobei die Bügelabschnitte (18a) der Betätigungseinrichtungen (18) durch ein Bügelelement (31) miteinander verbunden sind, so dass die Betätigungseinrichtungen (18) simultan betätigbar sind.

10. Konsoleneinrichtung (1) nach einem der vorhergehenden Ansprüche,
**dadurch gekennzeichnet, dass**
eine Antriebsvorrichtung (32) mit der Konsoleneinrichtung (1) wirkverbunden ist, wobei durch die Antriebsvorrichtung (32) nach dem Lösen der Arretierung eine Verlagerung der Konsoleneinrichtung (1) entlang der Längsrichtung X antreibbar ist.

11. Cockpiteinrichtung (2) mit einer Konsoleneinrichtung (1) nach einem der vorhergehenden Ansprüche.

12. Fahrzeugkabine (33) für Nutzfahrzeuge mit einer Cockpiteinrichtung (2) nach Anspruch 11.

## Claims

1. Console device (1) for a cockpit device (2), in particular for commercial vehicles, wherein the console device (1) is arranged along a width axis Y' substantially centrally to the cockpit device (2) and is displaceable along a longitudinal axis X' relative to the cockpit device (2), wherein a base body (3) of the console device (1) can be arranged on a vehicle body (4) by means of a rail apparatus (5), wherein the rail apparatus (5) comprises at least one arresting device (6) which arrests a displacement of the console device (1) in a standby state,
**characterised in that**
the rail apparatus (5) comprises at least one rail device (11) which has a substantially U-shaped slide rail (12) and a substantially U-shaped stationary rail (13), wherein the slide rail (12) at least partially engages around the stationary rail (13) and is displaceable relative to the stationary rail (13), wherein at least one bearing element (14) is arranged between the slide rail (12) and the stationary rail (13), wherein at least one toothed rack (15) is provided on the stationary rail (13), wherein the toothed rack (15) has a plurality of teeth (16) and outwardly open locking openings (17) arranged between the teeth.

2. Console device (1) according to claim 1,
**characterised in that**
the base body (3) has an upper surface (7) along the height axis Z, wherein the upper surface (7) is designed as a storage element (8), wherein the storage element (8) has at least one recessed area, wherein the storage element (8) is displaceable along the longitudinal axis X relative to the base body (3), wherein at least one drawer element (9) is arranged displaceably in the base body (3).

3. Console device (1) according to claim 2,
**characterised in that**
an operating screen (10), a tablet computer or a receptacle for a tablet computer is integrated in the upper surface (7) of the base body (3).

4. Console device (1) according to any of the preceding claims,
**characterised in that**
the arresting device (6) comprises an actuating device (18) which is at least partially rotatable about a first rotation axis (19), wherein this first rotational movement can be converted into a second rotational movement of a latching element (22) about a second rotation axis (20) by means of a transmission device (21), such that the arrest of the rail apparatus (5) can be released, wherein in a standby state, a locking portion (22a) of the latching element (22) engages in the locking openings (17) of the toothed rack (15).

5. Console device (1) according to claim 4,
**characterised in that**
the actuating device (18) is arranged in a lower portion (23) of the console device (1) along the height axis Z, wherein a downward rotation of the actuating device (18) along the height axis Z causes a downward rotation of the locking portion (22a) of the latching element (22) along the height axis Z, such that the engagement of the latching portion (22a) in the latching openings (17) of the toothed rack (15) is released and the arrest of the console device (1) is released.

6. Console device (1) according to either claim 4 or 5,
**characterised in that**
the actuating device (18) comprises a bracket portion (18a) which is positioned before the first rotation axis (19) along the longitudinal axis X, and a lever portion (18b) which is positioned behind the first rotation axis (19) along the longitudinal axis X, wherein the lever portion (18b) is non-positively and/or positively connected to a rear portion (24b) of a first element (24) of the transmission device (21), wherein the first element (24) is rotatable about the first rotation axis (19), wherein a front portion (24a) of the first element (24) is non-positively and/or positively connected to a rear portion (25b) of a central element (25), wherein the central element (25) is rotatable about a second rotation axis (20), wherein a front portion (25a) of the central element (25) is non-positively and/or positively connected to a front portion (22b) of the latching element (22).

7. Console device (1) according to any of claims 4 to 6,
**characterised in that**
the arresting device (6) comprises a fastening element (26) which is attached to the slide rail (12), wherein a first mounting device (27) is arranged on the fastening element (26), on the first mounting device the actuating device (18) and the first element (24) of the transmission device (21) are arranged rotatably about the first rotation axis (19), wherein the latching element (22) and the central element (25) of the transmission device (21) are arranged on the slide rail (12) by means of a second mounting device (28), wherein the slide rail (12) has a recess (29) through which the locking portion (22a) of the latching element (22) protrudes at least partially.

8. Console device (1) according to any of claims 4 to 7,
**characterised in that**
the arresting device (6) comprises a reset device (30) by means of which the engagement of the locking portion (22a) in the locking openings (17) of the toothed rack (15) and the rotation of the actuating device (18) about the first rotation axis (19) can be reset, wherein the reset device (30) is arranged on the slide rail (12) and is connected to the latching element (22), wherein a reset of the latching element (22) by the transmission device (21) can be transmitted to the actuating device (18).

9. Console device (1) according to any of claims 3 to 6,
**characterised in that**
the rail apparatus (5) has two rail devices (11) spaced apart from each other along the width direction Y, wherein the bracket portions (18a) of the actuating devices (18) are connected to each other by a bracket element (31) such that the actuating devices (18) can be actuated simultaneously.

10. Console device (1) according to any of the preceding claims,
**characterised in that**
a drive device (32) is operatively connected to the console device (1), wherein because of the drive device (32), a displacement of the console device (1) along the longitudinal direction X can be driven after the arrest is released.

11. Cockpit device (2) having a console device (1) according to any of the preceding claims.

12. Vehicle cabin (33) for commercial vehicles having a cockpit device (2) according to claim 11.

## Revendications

1. Dispositif de console (1) pour un dispositif de cockpit (2), en particulier pour des véhicules utilitaires, le dispositif de console (1) étant disposé le long d'un axe transversal Y' sensiblement au centre du dispositif de cockpit (2) et étant déplaçable le long d'un axe longitudinal X' par rapport au dispositif de cockpit (2), un corps de base (3) du dispositif de console (1) étant apte à être disposé sur une carrosserie de véhicule (4) au moyen d'un système de rail (5), le système de rail (5) comportant au moins un dispositif de blocage (6), lequel bloque dans un état au repos un déplacement du dispositif de console (1),
**caractérisé par le fait que**
le système de rail (5) comporte au moins un dispositif de rail (11), lequel présente une glissière (12) formée sensiblement en forme de U et un rail stationnaire (13) formé sensiblement en forme de U, la glissière (12) entourant au moins par endroits le rail stationnaire (13) et étant déplaçable par rapport au rail stationnaire (13), au moins un élément de support (14) étant disposé entre la glissière (12) et le rail stationnaire (13), au moins une crémaillère (15) étant prévue sur le rail stationnaire (13), la crémaillère (15) présentant une pluralité de dents (16) et des ouvertures d'encliquetage (17) ouvertes vers l'extérieur disposées entre les dents.

2. Dispositif de console (1) selon la revendication 1,
**caractérisé par le fait que**
le corps de base (3) présente une face supérieure (7) le long de l'axe vertical Z, la face supérieure (7) étant formée en tant qu'élément de tablette (8), l'élément de tablette (8) présentant au moins une partie en creux, l'élément de tablette (8) étant déplaçable le long de l'axe longitudinal X par rapport au corps de base (3), au moins un élément de tiroir (9) étant disposé déplaçable dans le corps de base (3).

3. Dispositif de console (1) selon la revendication 2,
**caractérisée par le fait qu'**
un écran de commande (10), un ordinateur tablette ou un logement pour un ordinateur tablette est intégré dans la face supérieure (7) du corps de base (3).

4. Dispositif de console (1) selon l'une des revendications précédentes,
**caractérisé par le fait que**
le dispositif de blocage (6) comporte un dispositif d'actionnement (18), lequel est apte à tourner au moins par endroits autour d'un premier axe de rotation (19), ce premier mouvement de rotation étant transmissible en un second mouvement de rotation d'un élément de verrouillage (22) autour d'un second axe de rotation (20) au moyen d'un dispositif de transmission (21), ce par quoi le blocage du système de rail (5) est libérable, une section d'encliquetage (22a) de l'élément de verrouillage (22) s'engageant dans les ouvertures d'encliquetage (17) de la crémaillère (15) à l'état au repos.

5. Dispositif de console (1) selon la revendication 4,
**caractérisé par le fait que**
le dispositif d'actionnement (18) est disposé dans une région inférieure (23) du dispositif de console (1), le long de l'axe vertical Z, une rotation du dispositif d'actionnement (18) le long de l'axe vertical Z vers le bas provoquant une rotation de la section d'encliquetage (22a) de l'élément de verrouillage (22) le long de l'axe vertical Z vers le bas, ce par quoi l'engagement de la section d'encliquetage (22a) dans les ouvertures d'encliquetage (17) de la crémaillère (15) est libéré et le blocage du dispositif de console (1) est libéré.

6. Dispositif de console (1) selon l'une des revendications 4 ou 5,
**caractérisé par le fait que**
le dispositif d'actionnement (18) présente une section d'étrier (18a), laquelle se situe le long de l'axe longitudinal X devant le premier axe de rotation (19), et une section de levier (18b), laquelle se situe le long de l'axe longitudinal X derrière le premier axe de rotation (19), la section de levier (18b) étant reliée à force et/ou par coopération de formes à une section arrière (24b) d'un premier élément (24) du dispositif de transmission (21), le premier élément (24) étant apte à tourner autour du premier axe de rotation (19), une section avant (24a) du premier élément (24) étant reliée à force et/ou par coopération de formes à un élément central (25), l'élément central (25) étant apte à tourner autour d'un second axe de rotation (20), une section avant (25a) de l'élément central (25) étant reliée à force et/ou par coopération de formes à une section avant (22b) de l'élément de verrouillage (22).

7. Dispositif de console (1) selon l'une des revendications 4 à 6,
**caractérisé par le fait que**
le dispositif de blocage (6) comporte un élément de fixation (26), lequel est fixé sur la glissière (12), un premier dispositif de support (27) étant disposé sur l'élément de fixation (26), dispositif de support sur lequel le dispositif d'actionnement (18) et le premier élément (24) du dispositif de transmission (21) sont disposés aptes à tourner autour du premier axe de rotation (19), l'élément de verrouillage (22) et l'élément central (25) du dispositif de transmission (21) étant disposés sur la glissière (12) au moyen d'un second dispositif de support (28), la glissière (12) présentant un évidement (29) à travers lequel la section d'encliquetage (22a) de l'élément de verrouillage (22) fait saillie au moins par endroits.

8. Dispositif de console (1) selon l'une des revendications 4 à 7,
**caractérisé par le fait que**
le dispositif de blocage (6) comporte un dispositif de rappel (30) au moyen duquel l'engagement de la section d'encliquetage (22a) dans les ouvertures d'encliquetage (17) de la crémaillère (15) et la rotation du dispositif d'actionnement (18) autour du premier axe de rotation (19) sont aptes à être rappelés, le dispositif de rappel (30) étant disposé sur la glissière (12) et étant relié avec l'élément de verrouillage (22), un rappel de l'élément de verrouillage (22) étant transmissible par le dispositif de transmission (21) au dispositif d'actionnement (18).

9. Dispositif de console (1) selon l'une des revendications 3 à 6,
**caractérisé par le fait que**
le système de rail (5) comporte deux dispositifs de rail (11) espacés l'un de l'autre le long de la direction transversale Y, les sections d'étrier (18a) des dispositifs d'actionnement (18) étant reliées l'une à l'autre par un élément d'étrier (31) de telle sorte que les dispositifs d'actionnement (18) sont actionnables simultanément.

10. Dispositif de console (1) selon l'une des revendications précédentes,
**caractérisé par le fait qu'**
un dispositif d'actionnement (32) est relié fonctionnellement avec le dispositif de console (1), un déplacement du dispositif de console (1) étant actionnable le long de la direction longitudinale X par le dispositif d'actionnement (32) après la libération du blocage.

11. Dispositif de cockpit (2) comportant un dispositif de console (1) selon l'une des revendications précédentes.

12. Cabine de véhicule (33) pour véhicules utilitaires comportant un dispositif de cockpit (2) selon la revendication 11.
